# EUROPÄISCHE PATENTSCHRIFT

(11) **EP 1 055 472 B1**
(45) Veröffentlichungstag und Bekanntmachung des Hinweises auf die Patenterteilung: **12.09.2001**
(21) Anmeldenummer: 00116860.8
(22) Anmeldetag: 10.04.1995
(51) Int. Cl.: B23B 31/12

(54) **Bohrfutter**
Drill chuck
Mandrin de forage

(30) Priorität: 31.10.1994 DE 4438991
(43) Veröffentlichungstag der Anmeldung: 29.11.2000
(62) Teilanmeldung aus: 00113207.5
(73) Patentinhaber: Röhm, Günter Horst, D-89567 Sontheim (DE)
(72) Erfinder: Röhm, Günter Horst, D-89567 Sontheim (DE)
(74) Vertreter: Hentrich, Swen Dipl.-Phys. Dr.

(56) Entgegenhaltungen:
- EP-A- 0 017 748
- DE-A- 2 341 642

## Beschreibung

Die Erfindung betrifft ein Bohrfutter, mit den Merkmalen gemäß dem Oberbegriff des Anspruches 1.

Bohrfutter dieser Art sind für von Hand spannbare Bohrfutter aus DE 43 13 742 C1 bekannt. Selbstspannende Futter mit analogem Aufbau sind in DE 23 41 642 A1 beschrieben.

Im Fall nur von Hand spannbarer Bohrfutter sind die Spannbacken im Futterkörper geführt und stehen über eine Backenverzahnung mit einem Spanngewinde am Spannring im Eingriff. Bei selbstspannenden Bohrfuttern sind dagegen die Spannbacken am Spannring geführt und axial an einem in Richtung um die Futterachse mit den Spannbacken drehschlüssigen Spannkopf gehalten, der in einem im Futterkörper vorgesehenen Spanngewinde verdrehbar ist. In beiden Fällen begrenzen die Anschläge die Verdrehbarkeit des Stellrings gegenüber dem Futterkörper und die Sperreinrichtung ist zwischen dem Spannring und einem Schleppring wirksam, wobei sich der Kranz der Sperrausnehmungen am Spannring und das Sperrglied am Schleppring befinden, der unter der Kraft einer Nachstellfeder steht und dessen Verdrehung relativ zum Futterkörper auf einen für die Nachstellung der Spannbacken zugelassenen Drehweg begrenzt ist. Die Rasteinrichtung ist ebenfalls zwischen dem Stellring und dem Schleppring ausgebildet. Sie dient dazu, bei offenem Bohrfutter die gegenseitige Drehmitnahme von Stellring und Schleppring zu sichern und bei geschlossenem Bohrfutter auszuschließen, daß sich im Bohrbetrieb der Stellring selbsttätig gegenüber dem Schleppring verstellt. Wird der Stellring relativ zum Schleppring in der dem Schließen des Bohrfutters entsprechenden Drehrichtung des Spannrings verdreht, verstellt sich das Sperrglied aus dem an den Sperrausnehmungen eingerückten Zustand in den ausgerückten Zustand, und umgekehrt. Im Ergebnis bedarf ein solches Bohrfutter zum Spannen oder Lösen der Betätigung sowohl des Spannrings als auch des Stellrings, also der Handhabung mit zwei Händen.

Der Erfindung liegt die Aufgabe zugrunde, ein Bohrfutter der eingangs genannten Art auf möglichst einfache Weise so auszubilden, daß beim Durchbohren einer Wand sich das Bohrfutter nicht so festzieht, daß es nur noch mit Mühe geöffnet werden kann.

Diese Aufgabe wird bei einem Bohrfutter mit den eingangs genannten Merkmalen nach der Erfindung durch die Merkmale aus dem kennzeichnenden Teil des Patentanspruches 1 gelöst.

Der Anschlagring schützt den Stellring davor, beim Durchbohren einer Wand an die Wand anzustoßen und dadurch gebremst zu werden, was dazu führen könnte, daß das Bohrfutter sich festzieht. Auch schützt der Anschlagring den Stellring gegen größere axiale Belastung von vorn, so daß die axiale Abstützung des Stellrings nach hinten entsprechend gering beansprucht wird. Im übrigen schützt der Anschlagring den häufig als reines Kunststoffteil ausgebildeten Spannring vor den im vorderen Ringteil besonders hohen Verschleißbeanspruchungen. Vorteilhaft ist weiterhin, daß beim Betrieb des Bohrfutters im Linkslauf die Sperreinrichtung beim Durchbohren einer Wand geschont wird, weil die Bremswirkung in der dem Öffnen des Bohrfutters entsprechenden Richtung gleichfalls auf den Anschlagring und nicht den Stellring ausgeübt wird, also die Sperreinrichtung nicht das Bremsmoment aufnehmen muß.

Im Rahmen der Erfindung ist weiterhin vorgesehen, daß der Anschlagring axial unverschiebbar vor dem Stellring ihm gegenüber frei verdrehbar am Futterkörper gelagert ist.

Der Anschlagring ist axial nach vorn an einem Sprengring gehalten, der in einer Ringnut am Futterkörper sitzt, wobei der Anschlagring am axial vorderen Ende am radial äußeren Rand einen den Sprengring überdeckenden Ringwulst aufweist. Dieser Ringwulst schützt den den Stellring mit einer Hand haltenden Nutzer beim Drehen des Stellrings vor dem einseitig offenen und scharfkantigen Sprengring. Axial nach hinten ist der Anschlagring an einer Ringschulter des Futterkörpers gehalten.

Bei dem Bohrfutter dient der Stellring sowohl zur Verstellung des Sperrglieds als auch zur Verdrehung des Spannrings beim Verstellen der Spannbacken, wobei ersteres entlang dem Drehweg erfolgt, um den der Stellring gegenüber dem Spannring zwischen den Anschlägen verdrehbar ist. Die Rasteinrichtung hat dabei den Zweck, sicher zu stellen, daß bei offenem Bohrfutter der Spannring vom Stellring beim Verdrehen mitgenommen wird, ohne daß das Sperrglied in den eingerückten Zustand verstellt wird, bzw. bei gespanntem Futter sich der Stellring gegenüber dem Spannring nicht so verdrehen kann, daß das Sperrglied in den ausgerückten Zustand übergeht. Die Betätigung des Bohrfutters ist allein durch den Stellring möglich, der nur verdreht zu werden und sogar nur noch allein für die Hand zugänglich zu sein braucht, um das Bohrfutter zu schließen, zu spannen und zu sperren, bzw. zu entsperren, zu lösen und zu öffnen, was die Handhabung im Vergleich zu den bekannten Bohrfuttern wesentlich vereinfacht, vor allem dann, wenn das Spannen und Lösen des Bohrfutters mit Hilfe des Bohrmaschinenantriebs über die Bohrspindel erfolgen soll und dabei nur eine Hand zum Halten des Stellrings frei ist.

Das Sperrglied sperrt beim gespannten Bohrfutter den Spannring in der dem Öffnen des Bohrfutters entsprechenden Drehrichtung gegen Verdrehen, ermöglicht aber das Verdrehen des Spannrings in der entgegen gesetzten, also dem Schließen des Bohrfutters entsprechenden Drehrichtung ermöglicht. Der erfindungsgemäße Anschlagring verhindert beim Durchbohren einer Wand ein Bremsen des Stellrings und weiteres Festziehen des Bohrfutters infolge eines Verdrehens des Spannrings in der dem Schließen des Bohrfutters entsprechenden Drehrichtung, die von der Sperreinrichtung nicht gesperrt, sondern zum ordnungsgemäßen Spannen gerade zugelassen wird.

Im folgenden wird die Erfindung an in der Zeichnung dargestellten Ausführungsbeispielen näher erläutert; es zeigen:
- Fig. 1: ein Bohrfutter ohne Anschlagring das nicht unter den Schutzbereich des Anspruchs 1 fällt, links in einem Axialschnitt, rechts in einer Seitenansicht, jeweils in der Stellung der Spannbacken bei geringstem Spanndurchmesser und im ungesperrten Futterzustand,
- Fig. 2: den Schnitt II - II in Fig. 1,
- Fig. 3: den Schnitt III - III in Fig. 1,
- Fig. 4: den Schnitt IV - IV in Fig. 1, und zwar in der Teilfig. 4.1 im ungesperrten, in der Teilfig. 4.2 im gesperrten Futterzustand,
- Fig. 5: eine Ausführungsform des Bohrfutters nach der Erfindung in einer der Fig. 1 entsprechenden Darstellung,
- Fig. 6: den Schnitt VI - VI in Fig. 5,
- Fig. 7: den Schnitt VII - VII in Fig. 5,
- Fig. 8: das in Fig. 5 mit VIII bezeichnete Detail in vergrößerter Darstellung,
- Fig. 9: eine weitere Ausführungsform des erfindungsgemäßen Bohrfutters,
- Fig. 10: den Schnitt X - X in Fig. 9, und
- Fig. 11: den Schnitt XI - XI in Fig. 9, und zwar in der Teilfig. 11.1 im ungesperrten, in der Teilfig. 11.2 im gesperrten Futterzustand,

Die in der Zeichnung dargestellten Bohrfutter dienen zur Aufnahme eines nicht dargestellten Bohrers und besitzen je einen Futterkörper 1 zum Anschluß an eine ebenfalls nicht dargestellte Bohrspindel. Zum Anschluß der Bohrspindel besitzt der Futterkörper eine Gewindeaufnahme 2. Die Bohrfutter besitzen den Bohrer zentrierende, axial führende und/oder einspannende Spannbacken 5, die in der zur Futterachse 3 koaxialen Werkzeugaufnahme 4 zentrisch zur Futterachse verstellbar sind. Zu dieser Verstellung dient ein Spannring 8, der am Futterkörper 1 axial unverschiebbar und drehbar geführt und axial nach hinten über ein Kugellager 22, gegebenenfalls über einen Druckring 21, am Futterkörper 1 abgestützt ist. Um unerwünschte Verstellungen der Spannbacken 5 zu verhindern, kann die Drehstellung des Spannrings 8 fixiert werden. Dazu dient eine allgemein mit 11 bezeichnete und zwischen dem Spannring 8 und dem Futterkörper 1 ausgebildete Sperreinrichtung, die aus einem koaxialen Kranz von Sperrausnehmungen 10 auf der Seite des Futterkörpers und auf der Seite des Spannrings 8 aus mindestens einem Sperrglied 12 besteht, das unter der Kraft einer Sperrfeder in die Sperrausnehmungen 10 greift. Dabei liegen das Sperrglied 12 und die es aufnehmenden Sperrausnehmungen 10 einander in derart geneigten Flankenflächen 13', 13" an, daß diese den Spannring 8 in der dem Öffnen des Bohrfutters entsprechenden Drehrichtung (Pfeil 14) gegen Verdrehen verriegeln, beim Verdrehen des Spannrings 8 von Hand mit einem dazu ausreichend großen Drehmoment in der entgegen gesetzten, also dem Schließen des Bohrfutters entsprechenden Drehrichtung (Pfeil 15) das Sperrglied 12 aber gegen die Federkraft aus den Sperrausnehmungen 10 herausdrücken und von Sperrausnehmung zu Sperrausnehmung entlang dem Umfang des Futterkörpres 1 verrutschen lassen. Unter den im Bohrbetrieb auftretenden Schwingungsbeanspruchungen des Bohrfutters bleibt das Futter aber auch in dieser dem Pfeil 15 entsprechenden Drehrichtung gesperrt. Die für dieses Sperrverhalten unterschiedliche Neigung der Flankenflächen 13', 13" wird auf einfache Weise durch eine sägezahnförmige Gestaltung erreicht, wobei die steilere Flankenfläche 13' der Zahnbrust und die flachere Flankenfläche 13" dem Zahnrücken entspricht. Das Sperrglied 12 kann zwischen seinen an den Sperrausnehmungen 10 ein- und ausgerückten Zuständen verstellt werden, wozu das Sperrglied 12 durch eine Steuerkurve 35 an einem koaxialen, ebenfalls axial unverschiebbaren Stellring 9 verstellbar und entsprechend der Stellring 9 relativ zum Spannring 8 verdrehbar ist. Diese Verdrehung des Stellrings 9 relativ zum Spannring 8 ist in beiden Drehrichtungen (Pfeile 14, 15) formschlüssig begrenzt, wozu Anschläge 16', 16" vorgesehen sind. Durch Verdrehen des Stellrings 9 in der dem Schließen des Bohrfutters entsprechenden Drehrichtung (Pfeil 15) verstellt sich das Sperrglied 12 aus dem ausgerückten Zustand in den eingerückten Zustand und umgekehrt, also durch Verdrehen des Stellrings 9 in der dem Öffnen des Bohrfutters entsprechenden Drehrichtung (Pfeil 14) aus dem eingerückten Zustand in den ausgerückten Zustand. Zwischen dem Stellring 9 und dem Spannring 8 ist eine allgemein mit 17 bezeichnete Rasteinrichtung vorgesehen, die in Umfangsrichtung zwei Raststellungen aufweist, wobei sich in der einen Raststellung das Sperrglied 12 in dem an den Sperrausnehmungen 10 eingerückten Zustand und in der anderen Raststellung im ausgerückten Zustand befindet, wie ein Vergleich der Figurenpaare 4.1, 4.2 bzw. 11.1, 11.2 erkennen läßt. Dabei sind die Raststellungen durch den Eingriff eines von der Kraft einer Rastfeder beaufschlagten Rastgliedes 38" auf der Seite des Spannrings 8 in entsprechend am Stellring 9 angeordnete Rastaufnahmen 17" gebildet.

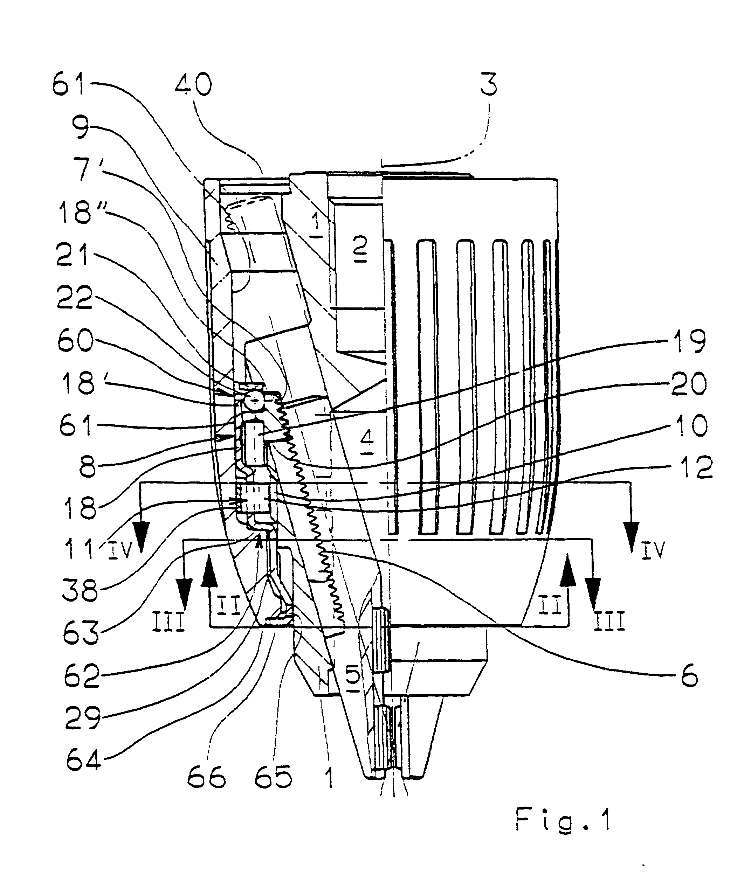

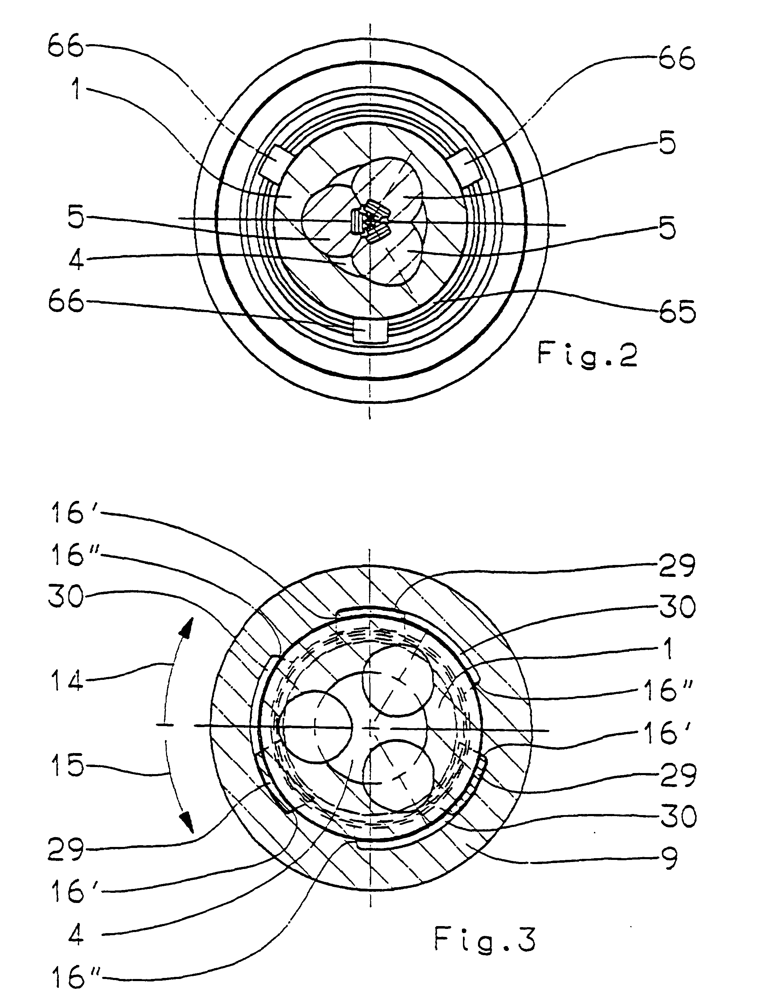

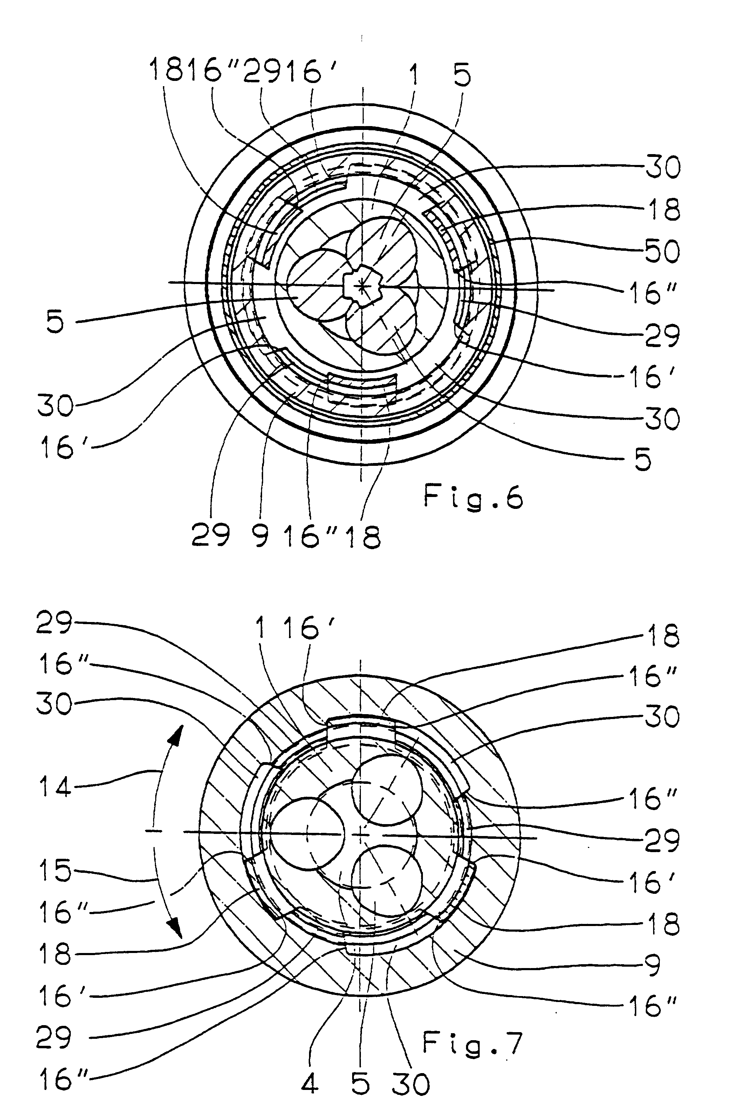

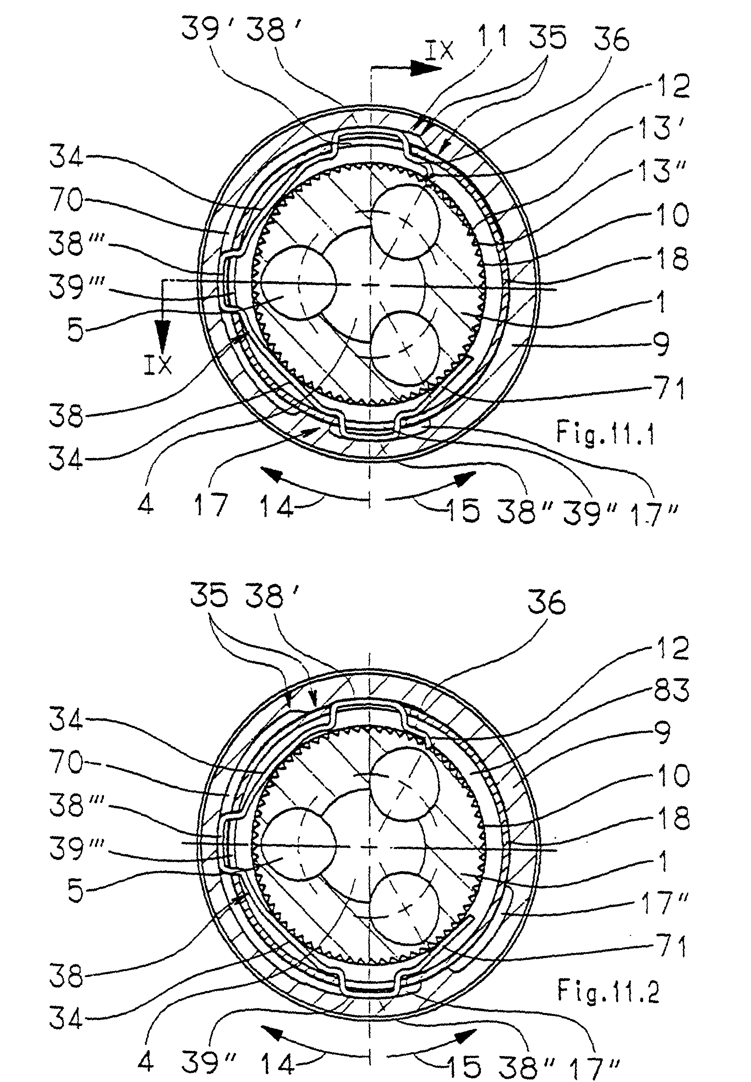

Die Ausführungsformen nach den Fig. 1 bis 11 zeigen von Hand spannbare Bohrfutter, bei welchen die Spannbacken 5 im Futterkörper 1 geführt und über eine Backenverzahnung 6 mit einem Spanngewinde 7' am Spannring 8 in Eingriff stehen.

Bei von Hand spannbaren Bohrfutter besitzt der Spannring 8 einen eine Führung für den Stellring 9 bildenden koaxialen Zwischenring 18, der die spannringseitigen Teile der Anschläge 16', 16" für den Stellring und der außerdem den Federbügel 38 trägt, sowie einen Kragenteil 18' umfaßt, der den das Spanngewinde 7' tragenden Teil des Spannrings 8 drehfest umschließt. Dabei besteht der das Spanngewinde 7' tragende Teil 18" des Spannrings 8 aus zwei umfangsmäßig geteilten, nämlich zunächst an jeder Teilung durch eine Bohrung 19 geschwächten und dann gebrochenen Ringhälften, die in einer Ringnut 20 des Futterkörpers 1 gegeneinander zusammengesetzt und durch den Kragenteil 18' am Futterkörper 1 zusammengehalten sind. Selbstverständlich kann aber der Spannring 8 auch einstückig ausgebildet sein, was jedoch in der Zeichnung nicht weiter dargestellt ist.

Der Spannring 8 bzw. Zwischenring 18 besitzt zur radialen Führung des Stellrings 9 eine kreiszylindrische Außenfläche 60, der die Spannhülse 9 mit einer entsprechend kreiszylindrischen Innenfläche 61 anliegt.

Im Ausführungsbeispiel nach den Fig. 1 bis 11 erstreckt sich diese kreiszylindrische Innenfläche 61 am Stellring 9 im gesamten axialen Bereich mit unverändertem Radius zwischen seinem rückwärtigen Ringende und dem Spannring 8. Daher kann der in axialer Richtung ungeteilt ausgebildete Stellring 9 axial von vorn her über den Futterkörper 1 auf den am Futterkörper fertig montierten Spannring 8 aufgeschoben werden, worauf der Stellring in seiner aufgeschobenen Endlage axial gesichert wird. Dazu kann der Zwischenring 18 eine kreisringförmige Außenschulter 62 aufweisen, welcher der Stellring 9 zur axialen Abstützung nach hinten mit einer entsprechend kreisringförmigen Innenschulter 63 anliegt. Die entsprechende Sicherung des Stellrings 9 gegen axiale Verschiebungen nach vorn kann entweder ebenfalls am Zwischenring 18 oder im Bereich axial hinter dem Spannring 8 am Futterkörper 1, beispielsweise an einem mit dem Futterkörper 1 verbundenen Abschlußring 40 erfolgen, der auch zur radialen Führung des Stellrings 9 im Bereich seines rückwärtigen Ringendes beitragen kann.

Außer in den Fig. 1 bis 4 ist axial vor dem Stellring 9 ein ihm gegenüber frei verdrehbarer Anschlagring 50 vorgesehen, der am Futterkörper 1 axial unverschiebbar und drehbar gelagert ist, wozu der Anschlagring 50 axial nach hinten an einer Ringschulter 51 des Futterkörpers 1 und axial nach vorn an einem Sprengring 52 gehalten ist, der in einer Ringnut am Futterkörper 1 sitzt. Der Anschlagring 50 schützt den Stellring 9 davor, beim Durchbohren einer Wand an die Wand anzustoßen und dadurch gebremst zu werden, was dazu führen könnte, daß das Bohrfutter sich so festzieht, daß es nur noch mit Mühe wieder geöffnet werden kann. Auch schützt der Anschlagring 50 den Stellring 9 gegen größere axiale Belastung von vorn, so daß die axiale Abstützung des Stellrings 9 nach hinten am Zwischenring 18 entsprechend gering beansprucht wird. Im übrigen schützt der Anschlagring 50 den häufig als reines Kunststoffteil ausgebildeten Spannring 9 vor den im vorderen Ringteil besonders hohen Verschleißbeanspruchungen.

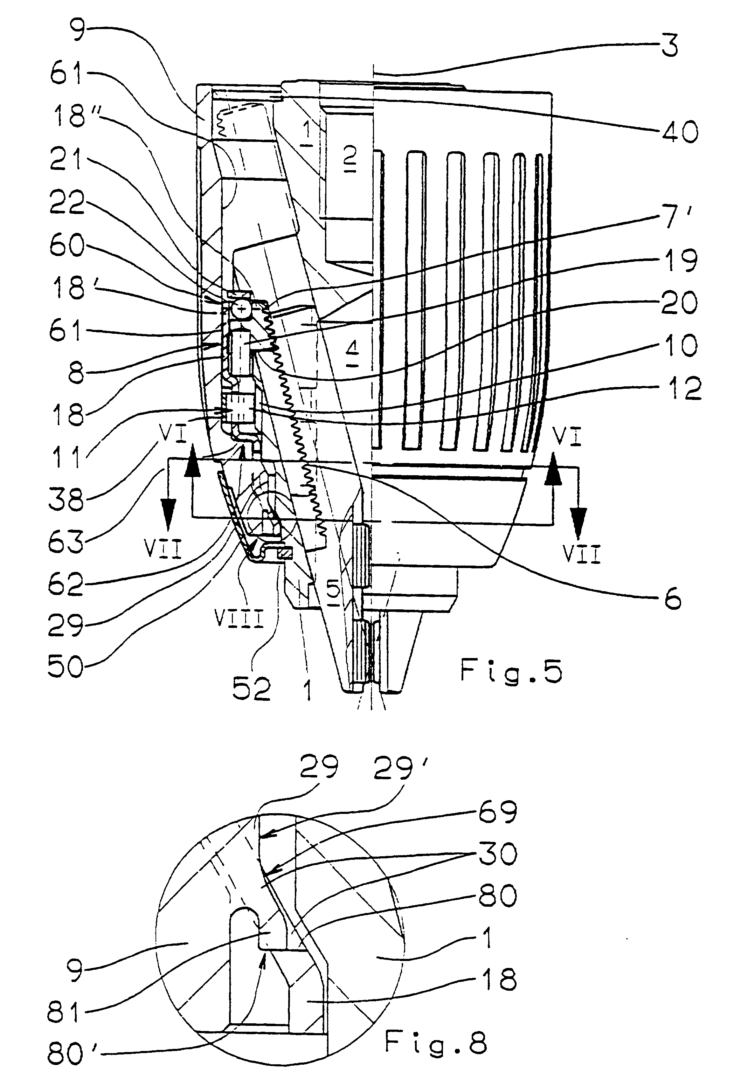

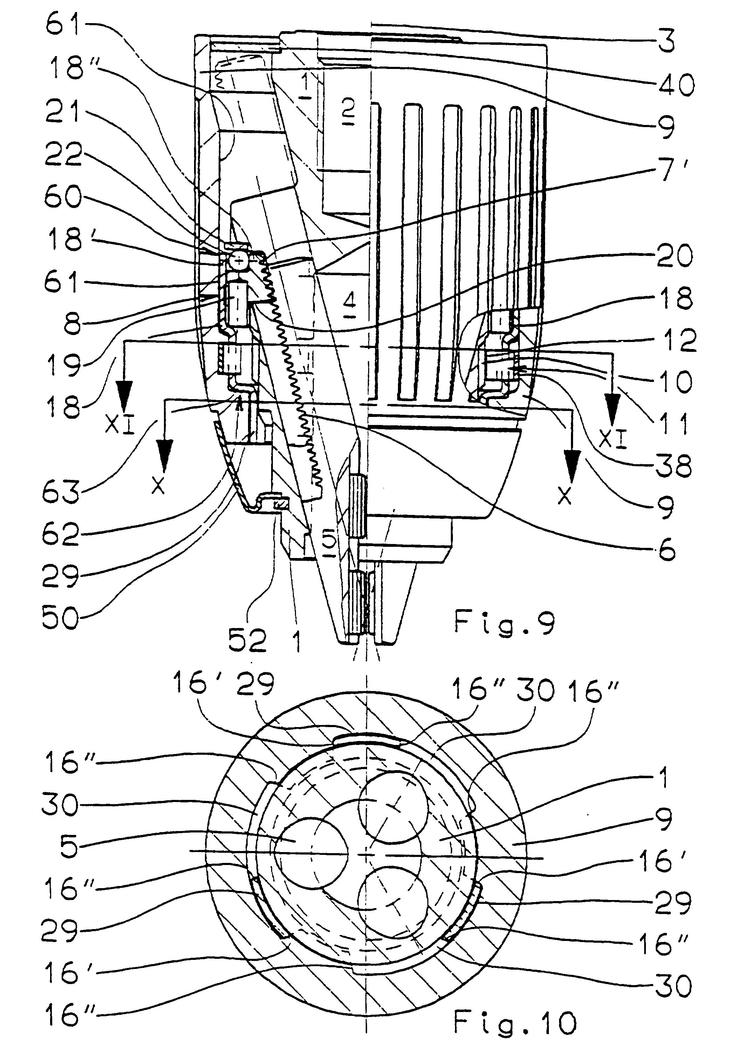

Für die Anschläge 16', 16" zur Drehbegrenzung zwischen dem Stellring 9 und dem Spannring 8 sind in den Ausführungsbeispielen der Fig. 1 bis 11 allgemein mit 29 bezeichnete Anschlagstücke am einen Ring 8 oder 9 und eine das Anschlagstück 29 aufnehmende Aussparung 30 am jeweils anderen Ring vorgesehen, wobei das Anschlagstück 29 an den Enden des Drehwegs jeweils mit einer der die Aussparung 30 in Umfangsrichtung begrenzenden beiden Stirnflächen 16', 16" zum Anschlag kommt. In den Ausführungsbeispielen sind jeweils drei solche gleichmäßig über den Futterumfang verteilt angeordnete Anschlagstücke 29 bzw.
Aussparungen 30 vorhanden. Im einzelnen können, wie in den Fig. 1 bis 4 oder 9 bis 11, die Anschlagstücke 29 als Wandstücke des Zwischenrings 18 ausgebildet sein, die vom vorderen Rand des Zwischenrings 18 axial nach vorn in die auf der Wandinnenseite des Stellrings 9 ausgebildeten Aussparungen 30 vorstehen. Die Anschlagstücke 29 können die Aussparungen 30 axial bis zum vorderen Rand 64 des Stellrings 9 durchgreifen und dort an ihrem vorderen Ende als axialer Anschlag für den Stellring ausgebildet sein, der den Stellring 9 gegen Verschieben axial nach vorn sichert. Dazu sind in den Fig. 1 bis 4 die Anschlagstücke 29 an ihrem unteren Ende in Umfangsrichtung durch einen Ring 65 miteinander verbunden, der an seinem den Anschlagstücken 29 abgewandten Rand Zungen 66 trägt, die auf die vordere Stirnfläche des Stellrings 9 umgebogen sind. Im Ausführungsbeispiel nach den Fig. 9 bis 11 durchsetzen die Anschlagstücke 29 in der Wand des Stellrings 9 vorgesehene Schlitze, die in Umfangsrichtung längs eines Kreisbogens verlaufen und die Aussparungen 30 bilden. Die Fig. 5 bis 8 zeigen ein weiteres Ausführungsbeispiel eines Bohrfutters mit axialer Führung des Stellrings 9 allein am Zwischenring 18. Dazu sind die Anschlagstücke 29 als radial einwärts gerichtete Nocken an der Wandinnenseite des Stellrings 9 und die Aussparungen 30 als Fenster in einem sich axial nach vorn konisch verjüngenden Kragen 69 des Zwischenrings 18 ausgebildet. Die radial innen liegende Fläche 29' der Nocken 29 besitzt einen Abstand von der Futterachse 3, der mindestens gleich dem größten Außendurchmesser 80' des Fensterrands 80 am Zwischenring 18 ist, so daß die die Anschlagstücke 29 bildenden Nocken das Aufschieben des Stellrings 9 auf den Zwischenring 18 nicht behindern. Die Nocken 29 tragen jeweils eine radial federnde Rastnase 81, die bei auf den Zwischenring 18 vollständig aufgeschobenem Stellring 9 hinter dem axial vorderen Rand 80 des Fensters 30 einrastet und dadurch die Spannhülse 9 gegen Verschieben axial nach vorn sichert, wie dies im einzelnen aus Fig. 8 ersichtlich ist.

Der Federbügel 38 bildet in allen Ausführungsbeispielen einen sich in Umfangsrichtung erstreckenden Federarm 36, der am freien Armende das Sperrglied 12 aufweist. Im eingerückten Zustand des Sperrglieds 12 liegt der Federarm 36 an der Steuerkurve 35 in einem Abstand vom Sperrglied 12 an, der das Durchfedern des Federarms 35 an der Stelle des Sperrglieds 12 um mindestens dessen Eingriffstiefe in die Sperrausnehmungen 10 ermöglicht, so daß beim Festziehen des Futters das Sperrglied 12 über den Kranz der Sperrausnehmungen 10 hinwegrutschen kann. Am Federbügel 38 sind zwei in Umfangsrichtung in gegenseitigem Abstand befindliche Vorsprünge 38', 38" vorgesehen. Von diesen bildet der sperrgliedseitige Vorsprung 38' die Anlage des Federarms 36 an der Steuerkurve 35, der andere Vorsprung 38" das Rastglied der Rasteinrichtung 17. Der Federbügel 38 ist durch ein Federband und das Sperrglied 12 unmittelbar durch das rückwärtige Ende des Federbands gebildet, gesehen in der dem Schließen des Bohrfutters entsprechenden Drehrichtung des Spannrings 8 (Pfeil 15). Die Vorsprünge 38', 38" sind jeweils in Form von Auswölbungen an das Federband angebogen.

Bei den Ausführungsformen nach den Fig. 1 bis 11 liegt der mit seiner Federbandfläche parallel zur Futterachse 3 ausgerichtete Federbügel 38 in einem in Umfangsrichtung zwischen dem Futterkörper 1 und dem Zwischenring 18 verlaufenden Ringschlitz 83, der futterkörperseitig vom Kranz der axial verlaufenden Sperrausnehmungen 10 begrenzt ist. Der Federbügel 38 liegt mit auswärts gerichteter Vorspannung dem Zwischenring 18 an und durchgreift mit seinen beiden Vorsprüngen 38', 38" den Zwischenring 18 in Fenstern 39', 39" radial nach außen. Die diese Fenster 39', 39" durchgreifenden Vorsprünge 38', 38" sichern den Federbügel 38 durch Anschlag an den die Fenster in Umfangsrichtung begrenzenden Fensterrändern gegen Verdrehen relativ zum Zwischenring 18. Die radiale Breite des Ringschlitzes 83 ist größer als die entsprechende Dicke des Federbügels 38, der mit einem etwa mittig zwischen den beiden Vorsprüngen 38', 38" befindlichen Scheitelbereich 31 radial nach außen am Zwischenring 18 abgestützt ist und zwischen diesem Scheitelbereich 31 und den beiden Vorsprüngen 38', 38" je einen Federsteg 34 zur tangentialen Anlage am Kranz der Sperrausnehmungen 10 bildet. Durch die Vorspannung des Federbügels 38 wird das Sperrglied 12 außer Eingriff an den Sperrausnehmungen 10 gehalten; im Sperrzustand muß es über die Steuerkurve 35 in die Sperrausnehmungen 10 hineingedrückt werden. Jedenfalls beim Sperreingriff des Sperrglieds 12 in die Sperrausnehmungen 10 liegen beide Federstege 34 federnd am Kranz der Sperrausnehmungen 10 an, so daß sich der Federbügel 38 in seiner Lage im Ringschlitz 83 selbsttätig justiert. In diesem Sinne günstig erweist sich auch ein Federschenkel 71, den der Federbügel 38 mit seinem dem Vorsprung 38" abgewandten Ende bildet und der ebenfalls unter Vorspannung dem Kranz der Sperrausnehmungen 10 anliegt. Die dem Futterkörper 1 anliegenden beiden Federstege 34 und der Federschenkel 71 üben im übrigen eine Bremswirkung aus, durch die beim Bohrbetrieb auftretende Vibrationen an Futterkörper 1, Spannring 8 bzw. Zwischenring 18 und Stellring 9 gedämpft werden.

Die beiden Vorsprünge 38', 38" liegen sich in Bezug auf die Futterachse 3 etwa diametral gegenüber. Im Ausführungsbeispiel nach den Fig. 9 bis 11 besitzt der Federbügel 38 im Scheitelbereich zwischen seinen beiden Vorsprüngen 38', 38" einen dritten, den Zwischenring 18 in einem weiteren Fenster 39"' nach außen durchgreifenden Vorsprung 38'''. Dieser Vorsprung 38''' greift in einer auf der Wandinnenseite des Stellrings 9 vorgesehene Nut 70, die sich in Umfangsrichtung mindestens über den maximal möglichen Verdrehungsweg des Stellrings 9 gegenüber dem Spannring 8 erstreckt. Diese Nut 70 bildet mit ihren beiden Seitenwänden eine axiale Anlage für den Vorsprung 38''', wodurch der Stellring 9 gegen Axialverschiebungen am Spannring 8 gesichert ist, so daß in diesem Fall auch auf die Ringschulter 63 verzichtet werden könnte. Eine vergleichbare axiale Führungsfunktion empfiehlt sich für die beiden Vorsprünge 38', 38" jedoch nicht, da hier die Anlage des Federbügels 38 an den Seitenwänden entsprechender Nuten die für den Sperrvorgang bzw. Rastvorgang erforderliche Beweglichkeit der beiden Vorsprünge 38', 38" beeinträchtigen könnte.

In den Ausführungsbeispielen nach den Fig. 1 bis 11 sind die Anschläge 16', 16", die Sperreinrichtung 11 und die Rasteinrichtung 17 axial vor dem Spanngewinde 7' angeordnet. Selbstverständlich liegt es im Rahmen der Erfindung, diese Teile, zumindest einige davon, axial hinter dem Spanngewinde 7' vorzusehen, wobei sich insbesondere der körperfeste Druckring 21 dazu anbietet, mit den Sperrausnehmungen 10 versehen zu werden.

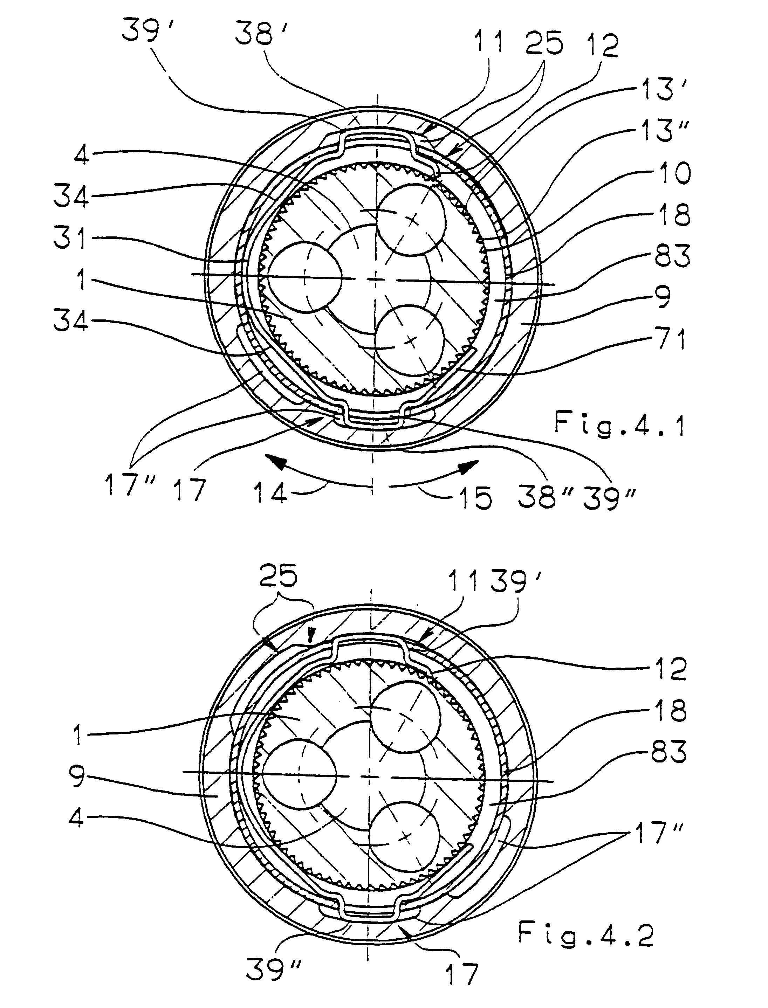

Im folgenden wird die Funktionsweise des Bohrfutters anhand des Ausführungsbeispiels nach den Fig. 1 bis 4.1, 4.2 kurz erläutert:

Die Fig. 1 bis 4.1 zeigen das Bohrfutter im ungesperrten Zustand. Der Federarm 36 ist radial nach außen verstellt, so daß das Sperrglied 12 außerhalb der Sperrausnehmungen 10 steht. Der in die Rastausnehmung 17" greifende Rastvorsprung 38" sichert den Zwischenring 18 und den Stellring 9 gegen Verdrehungen gegeneinander, so daß beim Drehen des Stellrings 9 über den Zwischenring 18 der Spannring 8 relativ zum Futterkörper 1 frei verdreht werden kann, solange das Bohrfutter offen ist. Befindet sich in der Werkzeugaufnahme 4 des Bohrfutters ein Bohrerschaft und wird der Stellring 9 in Richtung des Pfeils 15, also im Sinne eines Schließens des Futters verdreht, erfolgt zunächst eine Mitnahme des Spannrings 8 in der schon beschriebenen Weise, bis die Spannbacken 5 am Werkzeugschaft zur Anlage kommen. Eine weitere Mitnahme des Spannrings 8 durch den Stellring 9 ist dann nicht mehr möglich, so daß sich der Stellring 9 unter Überwindung der Rasteinrichtung 17 in die in Fig. 4.2 gezeigte Stellung gegenüber dem Zwischenring 18 verstellt. In dieser Stellung drückt der Stellring 9 über die Steuerkurve 35 den Federarm 36 radial nach innen und damit das Sperrglied 12 in den eingerückten Zustand an den Sperrausnehmungen 10. Damit ist der Spannring 8 gegenüber dem Futterkörper 1 gegen ein Verdrehen in Richtung des Pfeils 14 und damit gegen ein unerwünschtes Öffnen des Bohrfutters gesichert. Jedoch kann das Bohrfutter weiter und fester gespannt, nämlich der Stellring 9 relativ zum Futterkörper 1 in Richtung des Pfeiles 15 verdreht werden, wobei nun der Stellring 9 über die Anschläge 16" den Zwischenring 18 und damit den Spannring 8 in Richtung des Pfeiles 15 festzieht. Zum Lösen und Öffnen des gespannten Futters (Fig. 4.2) wird zunächst der Stellring 9 in Richtung des Pfeiles 14 verdreht, wobei zunächst wieder die Rasteinrichtung 17 verstellt wird und sich die Anschlagstücke 29 in den Aussparungen 30 wieder in den aus Fig. 4.1 ersichtlichen Zustand verstellen und gleichzeitig die Steuerkurve 35 den Federarm 36 freigibt, so daß sich der Federarm 36 aufgrund seiner Vorspannung radial nach außen verstellen kann, bis das Sperrglied 12 aus den Sperrausnehmungen 10 ausgetreten ist. Beim weiteren Drehen des Stellrings 9 wird über die Anschläge 16' der Spannring 18 mitgenommen, wodurch das Bohrfutter gelöst und geöffnet wird. Zur Handhabung des Bohrfutters ist nur die drehende Betätigung des Stellrings 9 gegenüber dem Futterkörper erforderlich, was nur eine Hand erfordert, wenn der Futterkörper 1 über die Bohrspindel gehalten oder umgekehrt der Stellring 9 von Hand festgehalten und der Futterkörper 1 durch die Bohrspindel gedreht wird. Der Stellring 9 kann sich daher axial über praktisch die ganze Länge des Bohrfutters bis zum axial hinteren Futterende erstrecken und dabei die einzige von außen der Hand zugängliche Futterhandhabe bilden, wie es im Ausführungsbeispiel nach den Fig. 1 bis 18 der Fall ist. Nur wenn dennoch gewünscht wird, den Futterkörper 1 auch unabhängig von der Bohrspindel manipulieren zu können, empfiehlt es sich, den Abschlußring 40 in Form eines Halterings für den Futterkörper 1 auszubilden, wobei dann der Abschlußring 40 drehfest mit dem Futterkörper verbunden sein muß, was aber in den Ausführungsbeispielen nach den Fig. 1 bis 11 im einzelnen nicht weiter erläutert ist. Ein solcher Haltering 54 kann aber auch einstückig mit dem Futterkörper 1 ausgebildet sein.

## Patentansprüche

1. Bohrfutter, insbesondere zum Schlagbohren, mit einem an eine Bohrspindel anschließbaren Futterkörper (1), mit zwischen sich eine Aufnahme (4) für das Bohrwerkzeug bildenden, im Futterkörper (1) geführten Spannbacken (5), die zum Öffnen und Schließen des Bohrfutters durch einen am Futterkörper (1) drehbar und axial unverschiebbar geführten Spannring (8) mit einem an den Spannbacken (5) im Eingriff stehenden Spanngewinde (7') verstellbar sind, ferner mit einer mittels mindestens eines mit einer Sperrfeder zusammenwirkenden Sperrgliedes (12) unerwünschte Verstellungen der Spannbacken (5) verhindernden Sperreinrichtung (11) zur Fixierung der Drehstellung des Spannrings (8) gegenüber dem Futterkörper (1), weiter mit einem zwischen Anschlägen (16', 16") begrenzt verdrehbaren koaxialen Stellring (9), durch dessen Verdrehen das Sperrglied (12) verstellbar ist, und mit einer selbstätige und unerwünschte Drehungen des Stellrings (9) gegenüber dem Spannring (8) verhindernden Rasteinrichtung (17) mit einem von der Kraft einer Rastfeder beaufschlagten Rastglied (38''), **dadurch gekennzeichnet, daß** axial vor dem
Stellring (9) ein Anschlagring (50) am
Futterkörper (1) drehbar gelagert ist.

2. Bohrfutter nach Anspruch 1, **dadurch gekennzeichnet, daß** der Anschlagring (50) axial unverschiebbar vor dem Stellring (9) am Futterkörper (1) gelagert ist.

3. Bohrfutter nach Anspruch 1 oder 2, **dadurch gekennzeichnet, daß** der Anschlagring (50) vor dem Stellring (9) ihm gegenüber frei verdrehbar am Futterkörper (1) gelagert ist.

4. Bohrfutter nach einem der Ansprüche 1 bis 3, **dadurch gekennzeichnet, daß** der Anschlagring (50) axial nach vorn an einem Sprengring (52) gehalten ist, der in einer Ringnut am Futterkörper (1) sitzt, und daß der Anschlagring (50) am axial vorderen Ende am radial äußeren Rand einen den Sprengring (52) überdeckenden Ringwulst aufweist.

5. Bohrfutter nach Anspruch 4, **dadurch gekennzeichnet, daß** der Anschlagring (50) axial nach hinten an einer Ringschulter (51) des Futterkörpers (1) gehalten ist.

## Claims

1. A drilling chuck, in particular for hammer drilling, comprising a chuck body (1) which can be connected to a drilling spindle, clamping jaws (5) which are guided in the chuck body (1) and which form between them a receiving means (4) for the drilling tool and which are displaceable for opening and closing the drilling chuck by a clamping ring (8) guided on the chuck body (1) rotatably and axially immovably, with a clamping screwthread (7') which is in engagement with the clamping jaws (5), further comprising a locking device (11) for preventing unwanted displacements of the clamping jaws (5) by means of at least one locking member (12) co-operating with a locking spring, for fixing the rotary position of the clamping ring (8) with respect to the chuck body (1), a coaxial setting ring (9) which is limitedly rotatable between abutments (16', 16") and by the rotation of which the locking member (12) is displaceable,and a detent means (17) for preventing independent and unwanted rotary movements of the setting ring (9) with respect to the clamping ring (8), with a detent member (38") acted upon by the force of a detent spring, **characterised in that** an abutment ring (50), is supported rotatably on the chuck body (1) axially in front of the setting ring (9).

2. A drilling chuck according to claim 1 **characterised in that** the abutment ring (50) is supported on the chuck body (1) axially immovably in front of the setting ring (9).

3. A drilling chuck according to claim 1 or claim 2 **characterised in that** the abutment ring (50) is supported on the chuck body (1) in front of the setting ring (9) freely rotatable with respect thereto.

4. A drilling chuck according to one of claims 1 to 3 **characterised in that** the abutment ring (50) is held axially forwardly at a circlip (52) which is seated in an annular groove on the chuck body (1) and at the axially forward end at the radially outward edge the abutment ring (50) has an annular ridge which overlaps the circlip (52).

5. A drilling chuck according to claim 4 **characterised in that** the abutment ring (50) is held axially rearwardly at an annular shoulder (51) of the chuck body (1).

## Revendications

1. Mandrin de perçage, en particulier pour le perçage à percussion, avec un corps de mandrin (1) qui peut être relié à une broche de perçage, avec des mors de serrage (5) qui définissent entre eux un logement (4) pour l'outil de perçage, sont guidés dans le corps de mandrin (1) et peuvent être déplacés, à des fins d'ouverture et de fermeture, à l'aide d'une bague de serrage (8) montée tournante, mais fixe dans la direction axiale, sur le corps de mandrin (1) et pourvue d'un filetage (7') en prise avec les mors de serrage (5), avec un dispositif de blocage (11) qui, par l'intermédiaire d'au moins un organe de blocage (12) coopérant avec un ressort de blocage, empêche des déplacements involontaires des mors de serrage (5), aux fins de fixer la position angulaire de la bague de serrage (8) par rapport au corps de mandrin (1), avec une bague de commande (9) coaxiale pouvant tourner de manière limitée entre des butées (16', 16"), par la rotation de laquelle l'organe de blocage (12) peut être déplacé, et avec un dispositif d'encliquetage (17), comprenant un élément d'encliquetage (38") sollicité par la force d'un ressort, qui empêche les rotations spontanées ou involontaires de la bague de commande (9) par rapport à la bague de serrage (8), **caractérisé en ce qu'**une bague de butée (50) est montée tournante sur le corps de mandrin (1), devant la bague de commande (9), vu dans la direction axiale.

2. Mandrin de perçage selon la revendication 1, **caractérisé en ce que** la bague de butée (50) est montée fixe dans la direction axiale sur le corps de mandrin (1), devant la bague de commande (9).

3. Mandrin de perçage selon la revendication 1, **caractérisé en ce que** la bague de butée (50) devant la bague de commande (9) est montée libre en rotation par rapport à celle-ci sur le corps de mandrin (1).

4. Mandrin de perçage selon une des revendications 1 à 3, **caractérisé en ce que** la bague de butée (50), vers l'avant dans la direction axiale, est tenue par un anneau élastique (52) monté dans une gorge annulaire dans le corps de mandrin (1) et en ce que la bague de butée (50), à son extrémité avant vu dans la direction axiale, au niveau de l'arête située radialement à l'extérieur, présente un bourrelet annulaire qui recouvre l'anneau élastique (52)

5. Mandrin de perçage selon la revendication 4, **caractérisé en ce que** la bague de butée (50), vers l'arrière vu dans la direction axiale, est tenue par un épaulement annulaire (51) du corps de mandrin (1).
